# EUROPEAN PATENT SPECIFICATION

(11) **EP 1 653 764 B1**
(45) Date of publication and mention of the grant of the patent: **14.05.2008**
(21) Application number: 05256098.4
(22) Date of filing: 29.09.2005
(51) Int. Cl.: H04Q 7/38

(54) **A method and apparatus for providing managed roaming service in a wireless network**
Verfahren und Vorrichtung zur Bereitstellung von verwalteten Roaming-Diensten in einem drahtlosen Netzwerk
Procédé et dispositif pour la fourniture d'un service d'itinérance géré dans un réseau sans fil

(30) Priority: 29.10.2004 US 977530
(43) Date of publication of application: 03.05.2006
(73) Proprietor: Lucent Technologies Inc., Murray Hill, New Jersey 07974-0636 (US)
(72) Inventor: Pereira, Austin, Pickerington Ohio 43147 (US); Sharma, Alok, Lisle Illinois 60532 (US)
(74) Representative: Sarup, David Alexander

(56) References cited:
- WO-A-01/54435
- WO-A-20/04047480
- US-B1- 6 490 450

## Description

### BACKGROUND OF THE INVENTION

This invention relates to a method and apparatus for providing managed roaming service in a wireless network. More particularly, the invention relates to a managed roaming application that can be implemented within a wireless network to intercept roaming registration, or location update, requests. The managed roaming application then performs at least one of a variety of call logic routines on the requests. The implementation of call logic routines facilitates improved management of roaming service for the service provider.

While the invention is particularly directed to the art of managed roaming service, and will be thus described with specific reference thereto, it will be appreciated that the invention may have usefulness in other fields and applications.

By way of background, market analysis show that the international roaming market is expected to increase its global revenues in future years. The high-margin international roaming services in Western Europe alone is estimated at 7% of the total wireless services revenue, but only accounts for an estimated 1.5% of the overall network traffic. This makes it an extremely attractive revenue source for all operators.

As globalization of businesses continues, an increasing mobile end-user community is demanding ubiquitous access for all their wireless communications needs. In fact, a study conducted by Cahners In-Stat shown that international travel has nearly doubled in less than 15 years. Almost 664 million arrivals occurred in the United States alone and nearly 400 million international arrivals occurred in Europe. The Asia Pacific region has experienced more than 115 million international arrivals, with Asia having the highest growth rate. This same study also found that fifty years ago only five countries accounted for 71 % of all arrivals, while in the year 2000, 20 countries comprises 70% of all arrivals indicating an increased diversity (more people traveling to more countries) in international travel. This trend is anticipated to continue with the international travel nearly tripling in the next 20 years. Cahners In-Stat also estimates that almost one in four travelers are traveling for business, as the main purpose of their trip.

According to this study, an estimated 91 million subscribers will generate nearly $29 billion in roaming revenues by 2005. With wireless penetrations reaching almost 88%, by 2006 in some regions, operators are looking for new revenue sources for growth and roaming is an extremely attractive source.

Notwithstanding the market potential of international roaming, it has been discovered that service providers worldwide have lost revenue due unmanaged roaming. Unmanaged roaming includes among others, roaming in non-preferred networks and allowing roaming in networks that have fewer subscriber service features than other networks. This becomes an even bigger issue for the global service providers where the service provider has operating companies in a large number of countries where the subscribers roam in. Introduction of managed roaming services for end-users can be a significant competitive advantage as well as a profitable business for global wireless operators.

Today there is no solution deployed in any service providers' wireless network to support managed roaming. There are currently no standards available for supporting a managed roaming service in the wireless network.

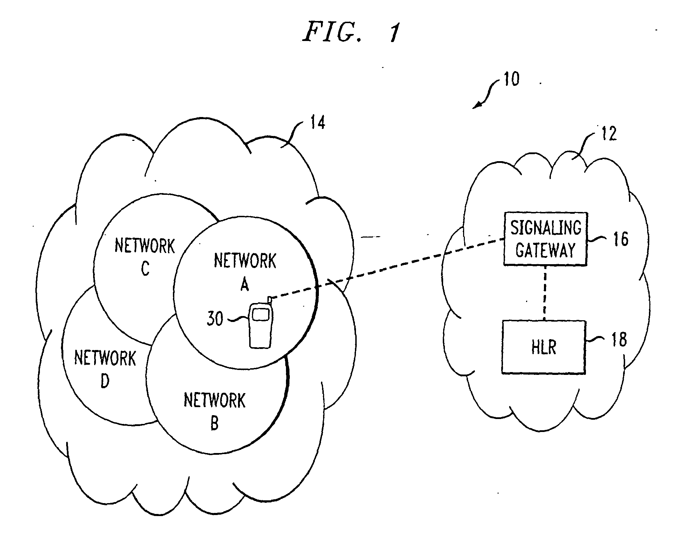

With reference now to Figure 1, an example wireless network illustrating current technology is shown. The network 10 includes a plurality of other networks such as home, or parent, network 12 and roaming, or foreign, network 14. The network 12 is the network considered to be the home network of the mobile station or device 30 and the network 14 may be a network located in another country or geographic region, relative to the home network 12. It will be understood that other networks, sub-networks, and network elements may be incorporated within the network 10.

As shown, however, the network 12 includes a signaling gateway 16 and a home location register (HLR) 118. While other network elements may be included within the network 12, only the illustrated elements are included for ease of explanation. The network 14 has a number of networks included therein, including network A, network B, network C, and network D. As illustrated, the mobile device 30 (whose home network is network 12) is roaming within network A of the network 14. In this case, the mobile station 30 attempts to register on network A and, thus, sends the registration, or location update, request to the signaling gateway 16. The signaling gateway 16 passes the request on to the home location register (HLR) 118. In this scenario, the signaling gateway 16 and the home location register (HLR) 118 will allow the mobile station 30 to register on network A without an intelligent decision being made by either component. Therefore, it is difficult, if not impossible, for service providers to efficiently manage roaming for their subscribers.

U.S. Pat. No. 6,490,450 is directed to capturing and modifying of mobile subscriber information in support of service applications such as wireless prepaid service for roaming subscribers. WO 01/54435 relates to intelligent roaming database updating wherein the current location of a device is used to determine and select one of a plurality of wireless carrier code lists for download to a particular mobile device. WO 2004/04780 relates to a method and system for management of roaming mobile subscribers using a roaming trigger and a priority list of networks. It is submitted that these systems do not allow for the most efficient management of roaming mobile devices.

The present invention contemplates a new and improved system that resolves the above-referenced difficulties and others.

### SUMMARY OF THE INVENTION

A method and apparatus according to the present invention are set out in the independent claims, to which the reader is now referred.

A method and apparatus for providing managed roaming service in a wireless network are provided. Of course, the technique is particularly useful in a situation where a subscriber has a home network but is roaming in a second network.

In one aspect of the invention, the method comprises receiving a message from the second network at a signaling gateway of the home network of the subscriber, transmitting the message to a managed roaming application, determining if the message is a location update request, transmitting the message to a home location register for processing of the message is not a location update request, and performing a call logic routine on the message by the managed roaming application if the request is a location update request.

In another aspect of the invention, the call logic routine comprises determining whether the location update request should be allowed based on a predetermined threshold percentage for the second network.

In another aspect of the invention, the call logic routine comprises determining whether the location update request should be allowed based on whether the second network is a preferred network.

In another aspect of the invention, the call logic routine comprises determining whether the location update request originates from a GPRS subscriber.

In another aspect of the invention, the call logic routine comprises determining whether the location update request should be allowed based on whether the home network and the second network belong to a common service provider.

In another aspect of the invention, means are provided to accomplish the method according to the present invention.

In another aspect of the invention, the system comprises a database having stored therein subscriber and network profile data and at least one front end element operative to receive a message, determine if the message is a location update request, transmit the message to a home location register for processing if the message is not a location update request, and perform a call logic routine on the message if the request is a location update request.

In another aspect of the invention, the at least one front end element is operative to receive the message from a signaling gateway.

In another aspect of the invention, the call logic routine comprises determining whether the location update request should be allowed based on a predetermined threshold percentage for a second network.

In another aspect of the invention, the call logic routine comprises determining whether the location update request should be allowed based on whether a second network is a preferred network.

In another aspect of the invention, the call logic routine comprises determining whether the location update request originates from a GPRS subscriber.

In another aspect of the invention, the call logic routine comprises determining whether the location update request should be allowed based on whether a home network and a second network belong to a common service provider.

In another aspect of the invention, the call logic routine is performed based on the subscriber and network profile data stored in the database.

In another aspect of the invention, the database is a centralized database.

In another aspect of the invention, the at least one front end element is a plurality of front end elements distributed throughout the wireless network.

In another aspect of the invention, the call logic routine comprises updating a public land mobile network (PLMN) list of a subscriber.

### DESCRIPTION OF THE DRAWINGS

The present invention exists in the construction, arrangement, and combination of the various parts of the device, and steps of the method, whereby the objects contemplated are attained as hereinafter more fully set forth, specifically pointed out in the claims, and illustrated in the accompanying drawings in which:
Figure 1 is a block diagram of a prior network;
Figure 2 is a block diagram of a network to which the present invention may be implemented;
Figure 3 is a flow chart illustrating a method according to the present invention;
Figure 4 is a block diagram of a managed roaming service module according to the present invention;
Figure 5 is a block diagram of a network into which an embodiment of the present invention is implemented;
Figure 6 is a call flow diagram according to an embodiment of the present invention;
Figure 7 is a call flow diagram according to an embodiment of the present invention;
Figure 8 is a call flow diagram according to an embodiment of the present invention;
Figure 9 is a call flow diagram according to an embodiment of the present invention;
Figure 10 is a call flow diagram according to an embodiment of the present invention;
Figure 11 is a call flow diagram according to an embodiment of the present invention;
Figure 12 is a call flow diagram according to an embodiment of the present invention;
Figure 13 is a call flow diagram according to an embodiment of the present invention;
Figure 14 is a call flow diagram according to an embodiment of the present invention;
Figure 15 is a call flow diagram according to an embodiment of the present invention;
Figure 16 is a call flow diagram according to an embodiment of the present invention;
Figure 17 is a call flow diagram according to an embodiment of the present invention;
Figure 18 is a call flow diagram according to an embodiment of the present invention; and,
Figure 19 is a call flow diagram according to an embodiment of the present invention.

### DETAILED DESCRIPTION OF THE PREFERRED EMBODIMENTS

With the growth in the number of deployed wireless networks, there is incentive for a service provider to manage the roaming requirements of wireless subscribers in such a way so as to increase the productivity and efficient utilization of its resources. The smooth introduction of roaming services to end-users requires customer self-care support and maximum assistance in provisioning from the network. After initial installation, roaming services require continuous automatic termination adaptation.

The presently described embodiments demonstrate provisioning of roaming data and dynamic reconfiguration of the mobile terminal. In at least one form, the presently described embodiments facilitate seamless roaming across different operator networks (such as GSM, GPRS, or UMTS) by eliminating the need for manual tasks, such as configuration and network selection. The added advantage of the presently described embodiments is that business users and consumers can have access to a given operator's services anywhere, anytime and through any device, regardless of network technology. The amount of control can be customized and is typically based on operator requirements. The evolution path of Managed Roaming Service can lead to the inclusion of the 3G interworking with the WiFi services wherein the VPN connection set-up and Wi-Fi network authentication parameters need to be securely retrieved by the mobile terminal from the provisioning data.

The service provider can generate added revenue by distinguishing premium subscribers from other categories of subscribers and charging different types of subscribers based on different types of network availabilities. Since the Managed Roaming Application provides the Service Provider a control on diverting their mobile traffic to their network rather than to their roaming partners' network, the Service Provider realizes a greater revenue by an efficient utilization of their network. In addition, a Managed Roaming Service such as that of the presently described embodiments helps Service Providers to negotiate better deals with the roaming partners thereby reducing the roaming costs of the subscribers.

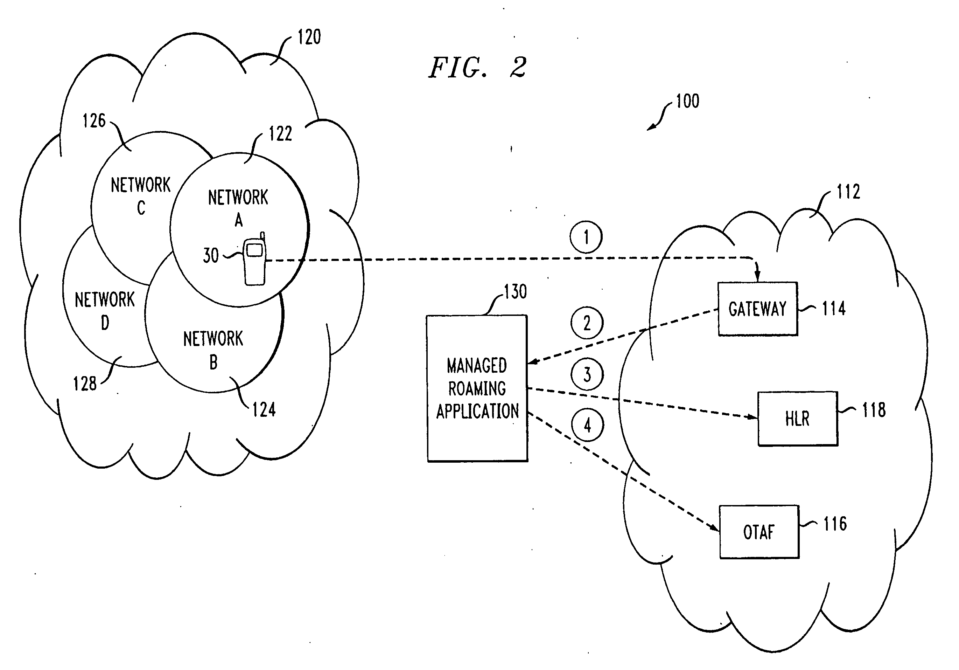

Referring now to the drawings wherein the showings are for purposes of illustrating the preferred embodiments of the invention only and not for purposes of limiting same, Figure 2 provides a view of the overall preferred system according to the present invention. As shown, a network 100 into which the presently described embodiments may be implemented is represented in block form. The network 100 includes a home, or parent, network 112 having a signaling gateway 114, an over-the-air function (OTAF) module 116, and a home location register (HLR) 118. Also shown within the network 100 is another network 120 which includes therein other networks, or sub-networks, such as network A (at 122), network B (at 124), network C (at 126), and network D (at 128). Notably, network 100 also includes a managed roaming application module 130.

It should be appreciated that the network 100 may include a variety of other networks, sub-networks, and network elements that are not shown for ease of explanation. The network 100 and its elements may also vary depending on the generation of the wireless technology that is implemented. The known networks and network elements illustrated may also take a variety of forms, as those of skill in the art will understand.

Significantly, the managed roaming application module 130 may take a variety of forms as well. For example, the managed roaming application module 130 may take the form of a software routine(s) that resides on the same network element as the signaling gateway 114 or it may be distributed at various appropriate locations within the network 112. For example, there may be a plurality of front end elements of the managed roaming application (described below) distributed throughout the network while a central database (described below) may be located in a single convenient location. In any configuration, it is, of course, preferable that the managed roaming application (MRA) module 130 (e.g., the front end elements) be operative to intercept messages or signaling from signaling gateways before they are forwarded to a home location register or the like. It should also be understood that implementation of the managed roaming application module 130 may include the implementation of various software techniques and hardware configurations. These techniques and configurations should be apparent upon an understanding of the presently described embodiments.

Referring again to Figure 2, when a subscriber roaming in a visited network (or foreign network) 120 with a mobile station 30 tries to register, the mobile station 30 attempts to send a location update (LU) operation from the visited network 120 to its own home location register (HLR) 118. However, the managed roaming application (MRA) module(s) 130 intercepts the location update (LU) operation request for the GSM, GPRS and UMTS cases, and controls whether the subscriber will be permitted to register in the foreign network 120. As shown, the mobile device 30 signals, or sends a message to, the signaling gateway 114 (as shown by dashed line 1). The message is sent to the managed roaming application (MRA) module 130 (as shown by the dashed line 2). The application 130 will then apply any of a number of call logic routines (described below) to accept or reject the attempt to register, depending on the type of message or request, network type, the number of attempts for the subscriber or other service logic, ... etc. In some cases, the managed roaming application (MRA) module 130 will communicate with the over-the-air function (OTAF) module 116 and/or the home location register (HLR) 118 depending on the call logic applied (as shown by the dashed lines 3 and 4). Of course, although not shown, signaling or messages may also be returned to the foreign network 120 to carryout out the call logic.

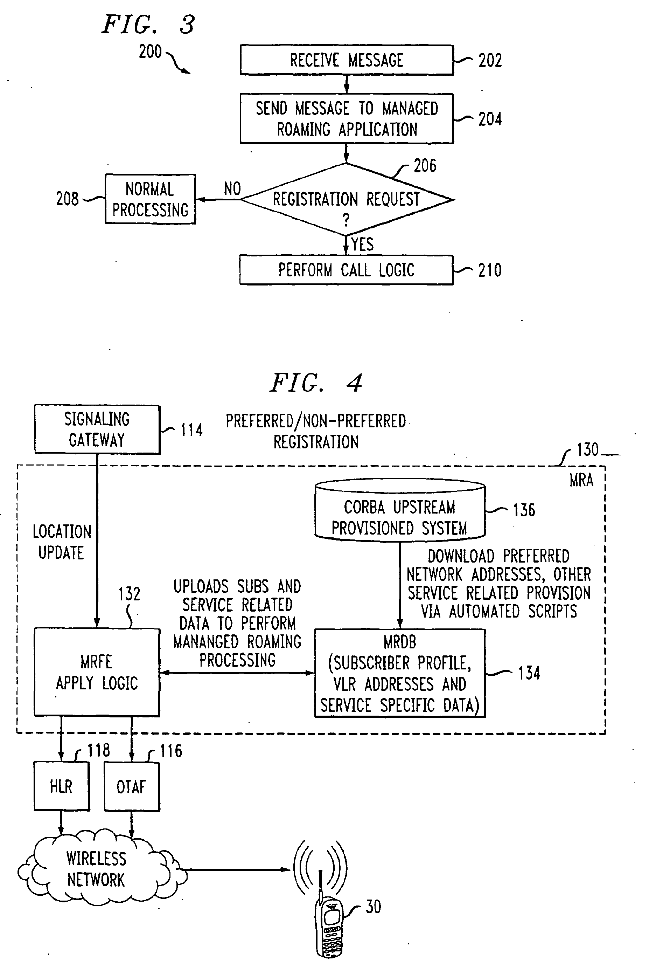

In this regard, referring now to Figure 3, a method 200 is illustrated. This method is typically applied by the managed roaming application (MRA) module 130 (in the managed roaming front end (MRFE) 132, as will be described below) to determine whether the call logic routines should be implemented. As shown, the method 200 includes an initial receipt of a message by the signaling gateway 114 from an outside network, such as foreign network 120 (at 202). The message is sent to the managed roaming application (MRA) module 130 (at 204) and the managed roaming application (MRA) module 130 determines whether the message received is a registration, or location update, request (at 206). If not, normal processing is undertaken (at 208). In this regard, the message is typically forwarded on to the home location register (HLR) 118.

However, if it is determined at 206 that the message received is a registration, or location update, request, the managed roaming application module then performs any of a number of call logic routines that will be described below (at 210). Implementation of the managed roaming application module 130 allows for improved management of roaming service for network service providers.

Referring now to Figure 4, in one form, the managed roaming application (MRA) module 130 is comprised of a managed roaming front end (MRFE) 132 and a managed roaming database (MRDB) 134. The managed roaming front end (MRFE) 132 performs the managed roaming call logic, or call logic routines, noted above to the incoming Location Update request. This element intercepts all the relevant mobile access platform (MAP) messages coming from other networks. The managed roaming front end (MRFE) module 132 has the responsibility to encode and decode any signaling messages (such as SS#7/Sigtran signaling messages) and interface the service logic with the appropriate networks (such as those networks using GSM, GPRS, or UMTS). This managed roaming front end element 132 relays the non-Location Update messages to the appropriate home location register (HLR) 118, as would normally be accomplished by the signaling gateway. It, however, extracts suitable data from the managed roaming database (MRDB) 134 to process incoming location updates (LUs). In some cases, as will be apparent below, the over-the-air function (OTAF) module 116, a wireless network, and a mobile station 30 may also be involved in the process of applying the call logic. The managed roaming database (MRDB) 134 is the repository for all information related to networks, subscribers and service logic information.

Typically, the managed roaming database (MRDB) 134 is populated or provisioned by upstream systems through a module such as that shown at 136. In this regard, the managed roaming database (MRDB) 134 in the managed roaming application (MRA) module 130 allows operators to provision configuration data and subscriber/visiting location register (VLR) network data through the standard provisioning mechanism that provides a singly point of entry for the managed roaming application (MRA) module 130 provisioning, administration and management.

The configuration data is distributed from the managed roaming database (MRDB) 134 to the managed roaming front end (MRFE) 132. As noted above, the managed roaming front end module may actually be implemented as a plurality of modules located in the same or different geographic regions. The managed roaming database (MRDB) 134 nodes in a mated pair are kept in synchronization using the database replication capability supported on the standard platforms. Thus, a common view of data can be obtained using either node in the mated pair.

Since the managed roaming database (MRDB) 134 centralizes the interface for data by assuming responsibility for distributing the managed roaming front end (MRFE) 132 configuration data and rules to the managed roaming front end modules (MRFEs) 132, the operator does not need to provision them separately for each node in a distributed deployment.

An illustration of some of the tables that are maintained by the managed roaming database (MRDB) 134 follows. It should be understood that the configuration of the managed roaming database (MRDB) 134 may vary depending on the application. Other tables may be included, while those discussed may be excluded. In addition, the content of each table may vary depending on the application. For example, the content of tables may vary depending on which call logic routine(s) is implemented in a particular application. In at least one form, the database is centralized to obtain advantages such as data consistency.

An IMSI2HLR_Address table is typically used for extracting the routing information towards the home location register (HLR) 118, by performing the international mobile subscriber identity (IMSI) to the home location register (HLR) 118 static translation.

A Translation Type Address table is used as for providing an alternate way of routing using the Translation Type. The Translation Type can be changed in the message destined to the STP.

An HLR_Location table is used to locate the home location register (HLR).

An IMSI_list table is a per subscriber table with the information about the subscriber's roaming profile.

A visiting location register (VLR)/SGSN_list table provides different network classification based on the subscriber profile. For example, for one of the service routines described below, the roaming subscriber is given different treatments based on the service logic of the network % profile.

A Network_table is used to store the number of customer's registration attempts in a network to compute percentages.

A Country_table is used to store the number of customer's registration attempts in a country to compute percentages.

An IMSI_Cache_table is used to keep track of the subscriber location update attempts. It will help the application to decide when an attempt shall be rejected or shall be accepted.

As noted above, the overall management system may apply a variety of different types of call logic to location update (LU) requests. The system may be configured to perform all or more than one of these call logic routines, which would simply require selection by an operator or designer to fit particular situations. Alternatively, a given network managed roaming application (MRA) module 130 may be designed to perform only a single call logic routine. These decisions, of course, lie within the discretion of the designer and may be resolved in a number of different manners within the scope of the invention herein.

Upon recognition of a message as a location update (LU) request, the managed roaming application (MRA) module 130 can perform at least four different types of call logic routines. The first call logic routine is based on a predetermined threshold percentage of allowed registrations on a network. This percentage of allowed registrations may relate to a percentage of registrations allowed on one network for a subscriber to another network. A second call logic routine determines whether the location update (LU) request should be allowed based on whether the visited network is a preferred network. A third call logic routine determines whether a location update (LU) request originates from a GPRS subscriber, and, a fourth call logic routine determines whether the location update (LU) request should be allowed based on whether the home network and the visited, or roaming, network belong to a common service provider. These four example scenarios will be described below.

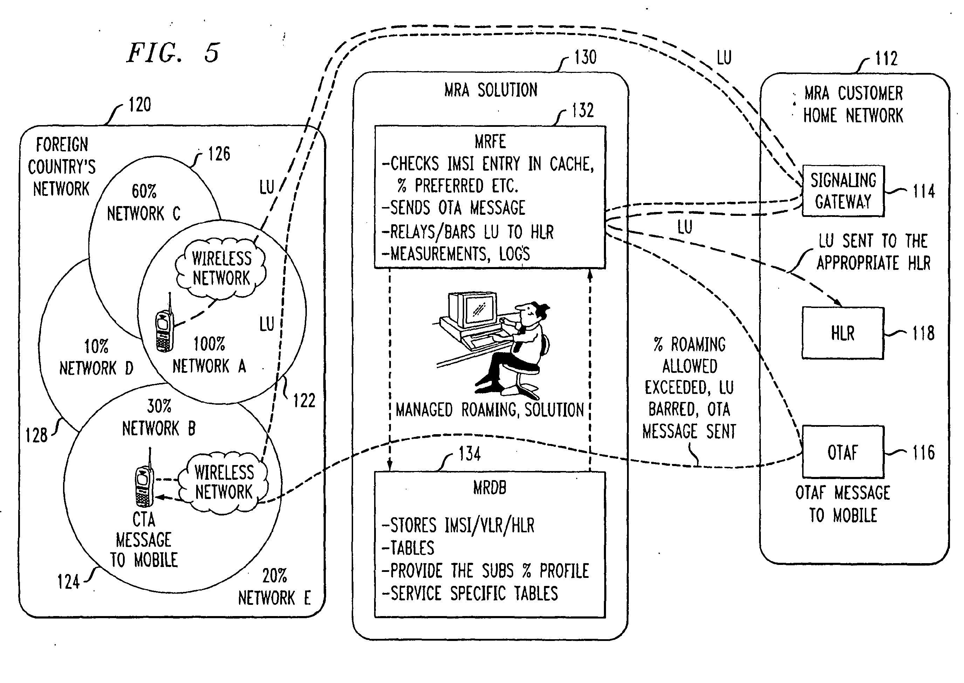

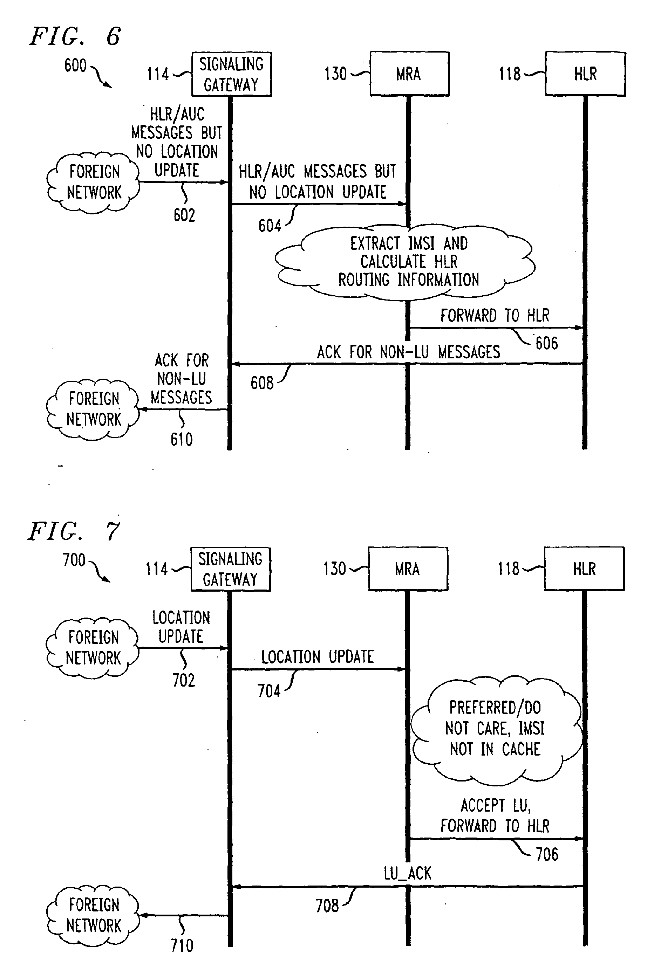

Referring now to Figure 5, a foreign network 120 having included therein networks 122, 124, 126, and 128 with different levels of roaming percentage allowed, (e.g., 100%, 30%, 60%, 10%), are shown for a given subscriber's profile. In this example, when a subscriber is roaming in the Network-A (122), the incoming registration is accepted and sent to the subscriber's home location register (HLR) 118, as the Network-A is the preferred network with a 100% acceptance threshold. When the subscriber roams into the Network-B, however, the managed roaming application (MRA) module 130 applies the managed service or call logic routine and determines whether an added registration will exceed the profile percentage (e.g., 30%). This is determined for the first incoming registration for the subscriber from the non-preferred network. As will become apparent below, whether it is a first attempt or not may determine the course of action. The managed roaming application (MRA) module 130, therefore, may bar the incoming registration and send an over-the-air (OTA) message to the subscriber's over-the-air function (OTAF) module to update the subscriber's subscriber identity module (SIM) card. Updating the public land mobile network (PLMN) list in the subscriber identity module (SIM) card within the mobile device 30 (as is described herein in a number of contexts) will generally result in improved performance and provide for more efficient management of roaming service. Doing so will allow for a delivery of data to the device 30 to allow it to more easily register on preferred networks in the future. The over-the-air (OTA) message that is sent may also provide a priority listing of networks upon which the mobile device 30 may register. A more detailed set of scenarios is shown in the call flow diagrams of Figures 6-10.

In operation , the managed roaming front end (MRFE) 132 receives the home location register (HLR) 118 based messages from the Signaling Gateway 114. It relays the non-location update (LU) messages to the appropriate home location register (HLR) 118 in the customer's public land mobile network (PLMN) list. For the location update (LU) messages the managed roaming front end (MRFE) 132 evaluates the basic call-logic after extracting the service/subscriber related data from the managed roaming database (MRDB) 134. The managed roaming front end (MRFE) 132 performs the following main functions.

If the location update (LU) is received from a Preferred Network (such as Network.A (122)) or, for example, from a network classified as "National Roaming", the managed roaming application (MRA) module 130 accepts registration and relays the message to the correct the home location register (HLR) 118. If the international mobile subscriber identity (IMSI) is present into the Cache table (that means a previous Registration attempt for this subscriber was rejected during a specified duration), then an over-the-air (OTA) message is sent to the subscriber identity module (SIM) card of this subscriber to update the public land mobile network (PLMN) list. The value of a timer, e.g., an ExtendExpirationTime, indicates whether or not the expiration time for the entry will be extended, if needed.

If the location update (LU) is received from a Non-Preferred network, and it is the first attempt to register, and a threshold percentage is exceeded by the attempt to register, the managed roaming application (MRA) module 130 bars the registration and sends a reject message to the visited MSC with a configurable reject cause (e.g. no answer scenario, etc.). At this time, a cache is created with a timer, e.g., an ExpirationTimeFirstEntry timer.

However, if it is the first attempt, and the percentage threshold allowed does not exceed the network profile, the managed roaming application (MRA) module 130 accepts the registration (relaying the message to the correct home location register (HLR) 118).

If it is a second attempt, the application shall accept registration (relaying to the correct home location register (HLR) 118) and send the over-the-air (OTA) message. The over-the-air (OTA) message is sent to the subscriber identity module (SIM) card of this subscriber to update the public land mobile network (PLMN) list. The value of the ExtendExpirationTime timer is extended, if needed.

Based on the main algorithm, the barring procedure is called on only if the subscriber identity module (SIM) isn't classified as "No restriction to apply" in the international mobile subscriber identity (IMSI) list and if the visiting location register (VLR) is classified as "Not preferred". An update procedure, e.g., an updateGPRSLocation procedure, is performed similar to the GSM location update (LU) accept/bar procedure.

When the Managed Roaming Application (MRA) 130 receives the location update (LU) from the visiting public land mobile network (VPLMN), it extracts the visiting location register (VLR) address, international mobile subscriber identity (IMSI) and calculates a timestamp. The managed roaming application (MRA) module 130 dips into the IMSI_List table and looks for the behavior to apply for a subscriber. If the international mobile subscriber identity (IMSI) is not present in the IMSI_List table, the application applies a configured operation, such as a DefaultIMSIService behavior (e.g., if the international mobile subscriber identity (IMSI) is not found in the international mobile subscriber identity (IMSI) list table, then an alarm and log event need to be generated). If the international mobile subscriber identity (IMSI) is present, then depending upon the international mobile subscriber identity (IMSI) characteristics, there may or may not be a visiting location register (VLR) address check. In case of "no check" the application relays the location update (LU) message to the correct home location register (HLR) 118 using the home location register (HLR) 118 routing information calculated toward the international mobile subscriber identity (IMSI). In case of "apply check" the application looks for the visiting location register (VLR) address in the visiting location register (VLR)/SGSN_list table and consequently decides the behavior to apply.

If the visiting location register (VLR) address is not present in the visiting location register (VLR)/SGSN_list table, the application applies a configured operation such as a DefaultVLR Behavior (e.g., if the visiting location register (VLR) is not found in the visiting location register (VLR)/SGSN_list table then an alarm and log event need to be generated), or else the application applies the behavior associated to the visiting location register (VLR) address ("preferred"/"don't care"/"not preferred"). The in depth preferred/don't care/not preferred solutions for the percentage distribution case are explained under the call-low section below.

The managed roaming front end (MRFE's) 132 calculates the Network Percentage Allowed. To do so, the managed roaming front end (MRFE) 132 identifies the network from where the location update is originating. The managed roaming front end (MRFE) 132 calculates the number of roamers in that network from the Network Table. The managed roaming front end (MRFE) 132 calculates the number of roamers in that country from the Country Table.

The managed roaming front end (MRFE) 132 then calculates the percentage of roamers in the selected network. If the percentage is less than the value associated to the network profile, the registration will be accepted. Otherwise, it will be rejected.

A parameter such as a PercentLocationAllowed parameter in the Parameter Table specifies the percentage of the location update (LU) acceptance from a visiting public land mobile network (VPLMN). If the PercentLocationAllowed = 0, all the first location updates received from a "not preferred public land mobile network (PLMN) list" will be rejected. If the PercentLocationAllowecd = 100, all the first location updates received from a "not preferred public land mobile network (PLMN) list" will be allowed.

Application timers are calibrated. If a subscriber's location update (LU) is rejected, then its international mobile subscriber identity (IMSI) is stored into the cache. The underlying logic will always allow the second location update (LU). If the ExtendExpirationTime flag is set to TRUE, it means that the expiration time of the entry, already present in cache, can be modified (extended or lowered). If the ExtendExpirationTime is extended, then the rejection rate of the location update (LU) is lowered and the Preferred Roaming is less effective. If the ExtendExpirationTime is lowered, then the rejection rate of the location update (LU) is increased and the Preferred Roaming becomes more effective.

If the expiration time can be modified, the application shall set this timer to the current time + ExpirationTimeEntryFound (normally this timer will be smaller than ExpirationTimeFirstEntry). The scope of the ExpirationTimeEntryFound is to postpone the entry cleaning, in order to allow the handling of the Application Version fallback procedure.

Referring to Figure 6, a call flow 600 shows that all home location register (HLR)/authentication center (AUC) related GSM/GPRS/UMTS messages, other than location update (LU) requests, are intercepted by the managed roaming application (MRA) module 130, will be relayed directly to the home location register (HLR) 118 without applying any other call logic. As shown, the signaling gateway 114 receives (at 602) then forwards the home location register HLR/AUC messages, coming from a foreign network, to the managed roaming application (MRA) module 130 (at 604). The managed roaming application (MRA) module 130, in turn, relays it to the home location register (HLR) 118, after extracting the routing information from the home location register (HLR) 118 location table, TT Address table, etc. (at 606). Acknowledgement is then returned to the foreign network through the signaling gateway 114 (at 608, 610).

Referring to Figure 7, a call flow 700 shows that if a subscriber registers in a Preferred Foreign Network and a location update (LU) request is made (at 702, 704), and if no international mobile subscriber identity (IMSI) entry is found in the Cache Table (i.e., this registration wasn't rejected before within a preconfigured duration), then the location update (LU) request is accepted by the managed roaming application (MRA) module 130. It is then forwarded on to the appropriate home location register (HLR) 118 (at 706). The home location register (HLR) 118 then sends the LU_Ack directly to the signaling gateway (at 708) which send the acknowledgement to the foreign network (at 710).

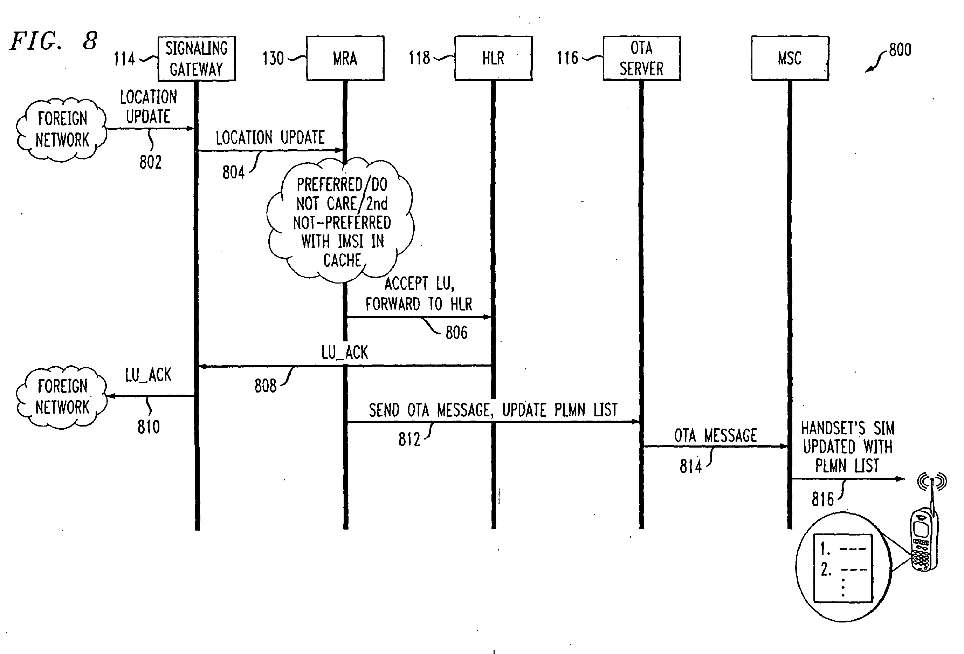

Referring to Figure 8, in a call flow 800, a subscriber either attempts to register in a 'Preferred' network -- or in a 'Not-Preferred' network -- and this subscriber has been rejected and is in the international mobile subscriber identity (IMSI) table. In this scenario, if this subscriber's registration was denied before, his/her 2^{nd} Not Preferred registration (at 802, 804) is accepted and the location update (LU) is forwarded to the home location register (HLR) 118 (at 806). If the subscriber is registered into the 'Preferred' network, his/her registration (at 802, 804) is accepted and forwarded to the home location register (HLR) 118 (at 806). Also, an over-the-air (OTA) message is sent to the over-the-air (OTA) Server (at 812) to download the 'Preferred' public land mobile network (PLMN) list into the subscriber's SIM card, so as to control subscriber's registration into the 'Preferred' network (at 814, 816).

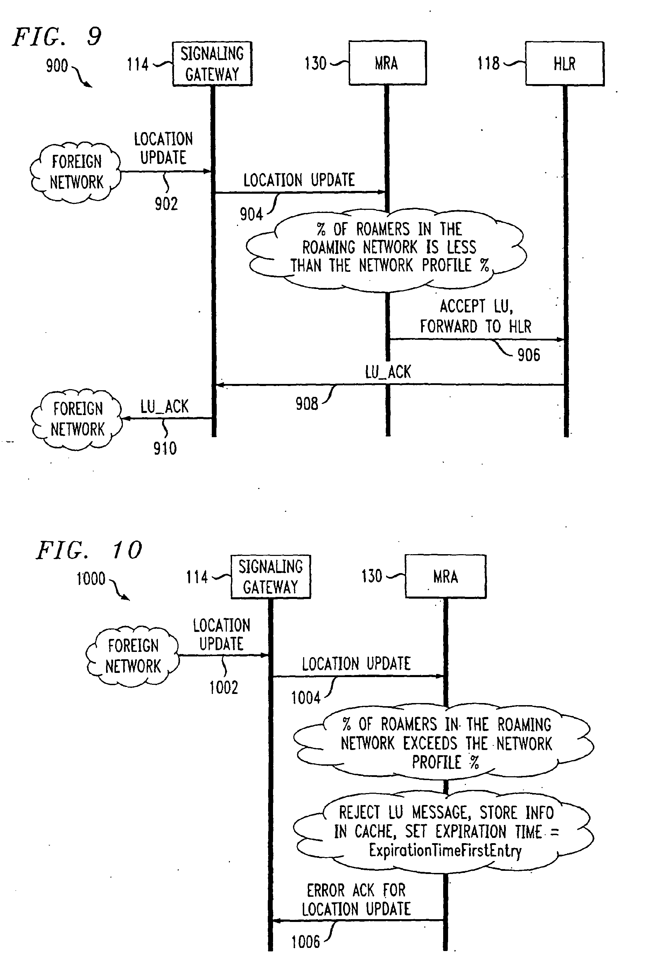

Referring to Figure 9, a call flow 900 demonstrates a scenario wherein a subscriber attempts to register into a Not-Preferred Network and there is not an international mobile subscriber identity (IMSI) entry for this subscriber into the Cache table (i.e., the Not-Preferred registration is the first one within a preconfigured duration) (at 902, 904). The managed roaming application (MRA) module 130 extracts the data from the 'network table' and the 'country table' and calculates the percentage of the roamers into the selected network. If the calculated percentage is less than the 'network profile percentage', then the location update (LU) is considered within the provisioned threshold and accepted and forwarded to the appropriate home location register (HLR) 118 (at 906). An acknowledgement is then forwarded back to the foreign network (at 908, 910).

Referring to Figure 10, a call flow 1000 shows how a first not-preferred registration is rejected when the calculated percentage of the roamers in the selected network exceeds the 'network profile percentage'. After getting a Location Update from a not-preferred network which doesn't have the international mobile subscriber identity (IMSI) entry into the cache table (at 1002, 1004), the managed roaming application (MRA) module 130 determines that the percentage of the roamers in the selected network has exceeded the provisioned threshold. Therefore, the managed roaming application (MRA) module 130 bars the location update (LU) message, stores the info in the cache table and sets expiration time=ExpirationTimeFirstEntry. An error message is transmitted back to the gateway (at 1006).

A second type of call logic will be referred to as standard behavior. Unlike the embodiments described in connection with Figures 5-10, this call logic is not based on a percentage threshold. Decisions on registration are based on whether a subscriber is in a preferred network or not.

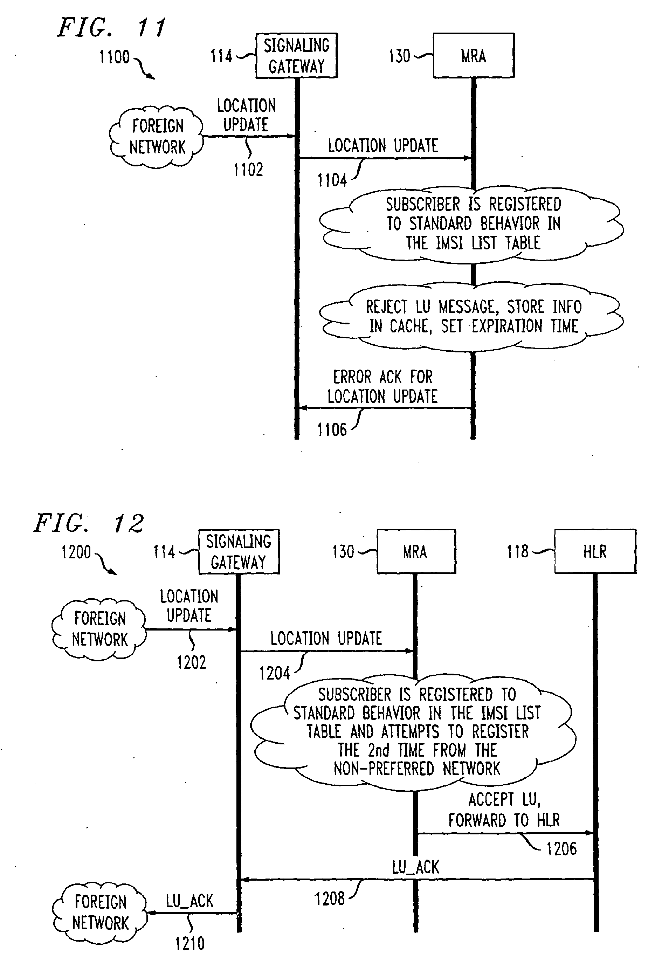

Referring to Figure 11, in 'standard behavior' logic, the managed roaming application (MRA) module 130 functionality bars the first Location Update coming from a not-preferred network and allows all the subsequent location updates (LUs) without any exceptions. The 'standard behavior' is triggered when a subscriber is activated for it in the international mobile subscriber identity (IMSI) table. In the first case, a subscriber sends a request from a not-preferred network (at 1102, 1104) and the first location update (LU) is barred (at 1106). In this case, as shown in Figure 11, the Managed Roaming Application call-logic determines that a 'standard behavior' flag in the international mobile subscriber identity (IMSI) table is marked as 'true'. The subscriber attempts to register in the not-preferred network for the first time and is barred from getting registered.

In the second case, a subscriber sends a location update (LU) request from a not-preferred network (at 1202, 1204) and the 2^{nd} location update (LU) is allowed (at 1206). In this case, as shown in the call flow 1200 of Figure 12, the managed roaming application (MRA) 130 call-logic determines that the 'standard behavior' flag in the international mobile subscriber identity (IMSI) table is marked as 'true'. The managed roaming application (MRA) module 130 call logic keeps a track of the subscriber's previous registrations and determines that the subscriber attempts to register in the not-preferred network for the 2^{nd} time and is allowed to be registered. An acknowledgement is transmitted (at 1208, 1210).

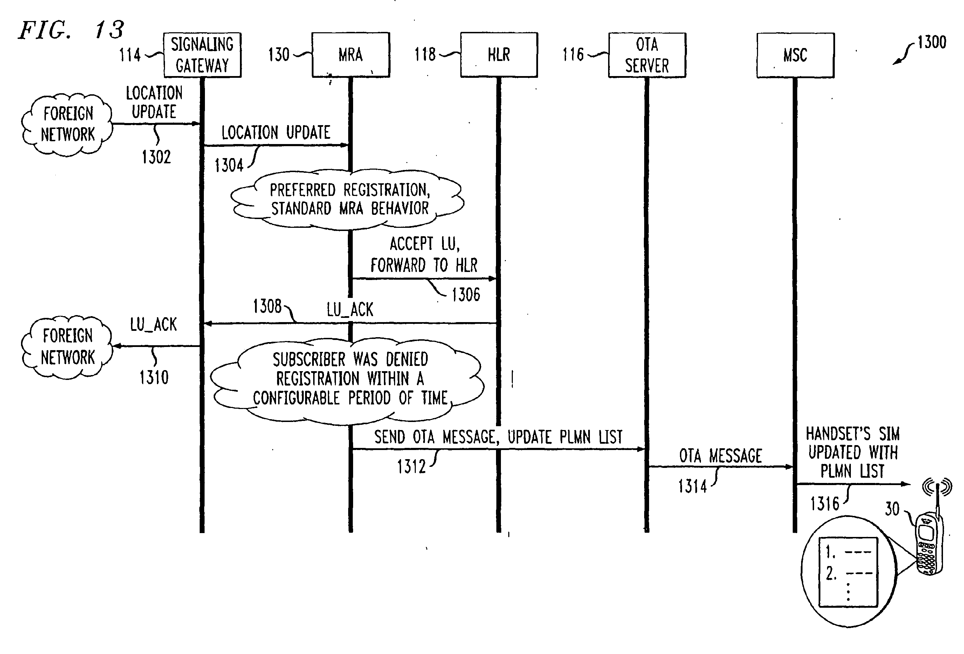

In a third case, a subscriber is in the preferred network and the location update (LU) is accepted. In this case, as shown in the call flow 1300 of Figure 13, the managed roaming application (MRA) 130 determines that the 'standard behavior' flag in the international mobile subscriber identity (IMSI) table is marked as 'true'. The managed roaming application (MRA) module 130 further determines that the subscriber attempts to register in the preferred network (at 1302, 1304) and is allowed to get registered in this network (at 1306). An acknowledgement is sent (at 1308, 1310). The managed roaming application (MRA) module 130 keeps track of the subscriber's earlier registrations and, if it was previously denied registration, then it also sends the over-the-air (OTA) message to clear the public land mobile network (PLMN) list in the subscriber's SIM card (at 1312, 1314 and 1316). However, if this subscriber wasn't denied the registration within the last configurable period of time, then the over-the-air (OTA) message is not transmitted.

A third type of call logic is used to determine if a user is a General Packet Radio Services (GPRS) user. To do so, the managed roaming application (MRA) module 130 can make use of one of the following two different approaches to determine if the incoming location update (LU) is from a GSM (Global System for Mobile Communication)/GPRS or a 'GPRS only' subscriber.

In one approach, for the GPRS Location Update, the managed roaming application (MRA) module 130 uses a per subscriber flag that needs to be provisioned in the international mobile subscriber identity (IMSI) list table to identify a subscriber as the 'GPRS only subscriber'. When a GPRS Location Update is received by the managed roaming application (MRA) module 130, the underlying managed roaming application (MRA) module 130 logic will check if the calling party subscriber is a 'GPRS only subscriber' for the following 2 possible treatments.
1) If the 'GPRS only subscriber' field is checked as 'y', then it means that the subscriber's equipment performs the location update (LU) only for the GPRS. In this case the same full MRS treatment is applied as that to any GSM subscriber.
2) If the 'GPRS only subscriber' field is checked as 'n', then it means that the equipment for this subscriber performs the location update (LU) for GPRS only when the location update (LU) for GSM was performed before. In this case, no check is performed and the GPRS location update (LU) is forwarded to the corresponding home location register (HLR) 118.

In another approach, the managed roaming application (MRA) module 130 keeps track of the subscriber's GSM registrations. In this scheme, it marks the GSM registration from each of the subscriber and logs the record for a configurable period of time. If the GPRS location update (LU) is received by the managed roaming application (MRA) module 130 for this subscriber within the configured period of time, then no managed roaming application (MRA) module 130 check is performed because the managed roaming application (MRA) module 130 check was performed before for the GSM location update (LU). The GPRS location update (LU) is then forwarded to the corresponding home location register (HLR) 118.

If the managed roaming application (MRA) module 130 receives the GPRS location update (LU) for a subscriber and doesn't find the entry for the GSM location update (LU) in the GSM - GPRS table, then it performs the same managed roaming application (MRA) module 130 on the GPRS subscriber as that performed on the GSM subscriber before.

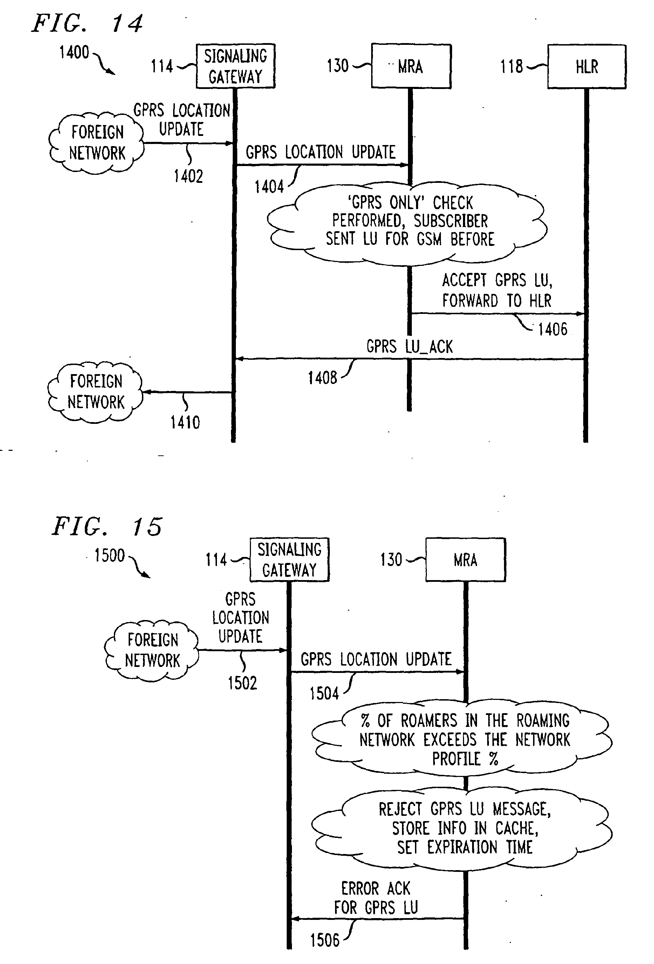

In either approach, the calls flows will be as follows. In a first case, a GPRS Registration for a subscriber is attempted after the GSM Registration has been performed. In this case, the call flow 1400 in Figure 14 shows that the managed roaming application (MRA) module 130 has received GPRS Location Update from a subscriber whose 'GPRS only subscriber' field is checked as 'n' in the IMSI_list table or the GSM location update (LU) was received before within a configurable period of time (at 1402, 1404). Either of these scenario means that the equipment for this subscriber performs the location update (LU) for GPRS after the location update (LU) for GSM was performed earlier. In this case no managed roaming application (MRA) module 130 check is performed on the GPRS location update (LU) because the managed roaming application (MRA) module 130 check was done before for the GSM location update (LU). So the GPRS location update (LU) is forwarded to the corresponding home location register (HLR) 118 (at 1406) and acknowledgement sent (at 1408, 1410).

In a second case, a first not-preferred GPRS Registration is attempted for a GPRS ONLY subscriber, and the GPRS subscriber is registered to control distribution in the international mobile subscriber identity (IMSI) lost table. In this case, the call flow 1500 in the Figure 15 shows that the managed roaming application (MRA) module 130 has received GPRS Location Update from a subscriber whose 'GPRS only subscriber' field is checked as 'y' in the IMSI_list table or the GSM location update (LU) wasn't received before within a configurable period of time (at 1502, 1504). Either of the scenario means that the equipment for this subscriber sends the location update (LU) for GPRS only and that no GSM location update (LU) was sent before. An error message is returned (at 1506).

This call flow shows how a first not-preferred GPRS registration is rejected when the calculated percentage of the roamers in the selected network exceeds the 'network profile percentage'. After getting a GPRS Location Update from a not-preferred network which doesn't have the international mobile subscriber identity (IMSI) entry into the cache table, the managed roaming application (MRA) module 130 determines that the percentage of the roamers in the selected network has exceeded the provisioned threshold. Therefore, the managed roaming application (MRA) module 130 bars the GPRS location update (LU) message, stores the info in the cache table and sets expiration time = ExpirationTimeFirstEntry. It should be appreciated, however, that this is only one example. The other call logic routines described herein could also be implemented.

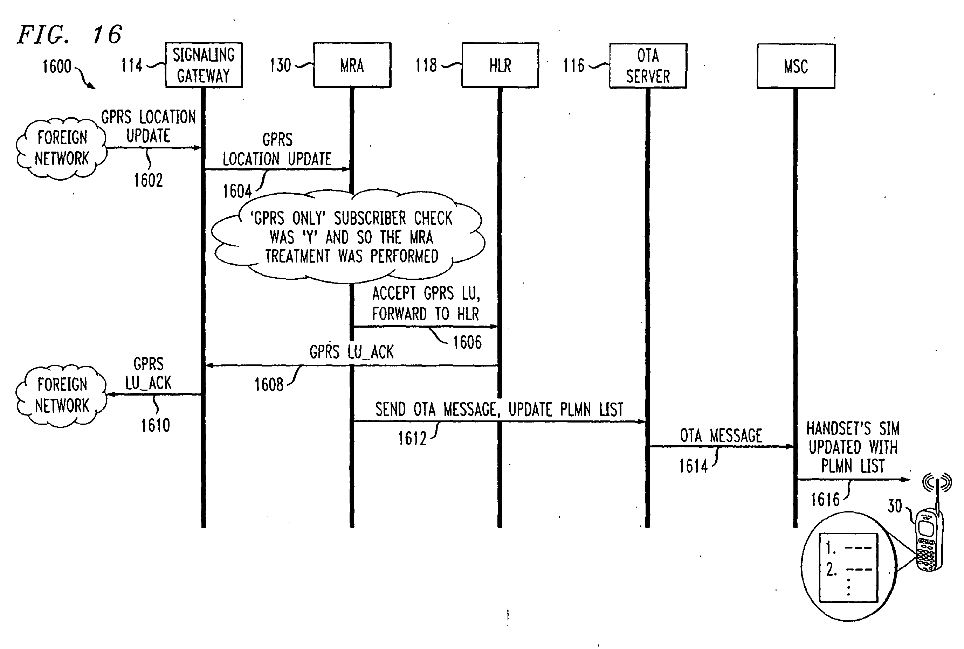

In a third case, a preferred / 2^{nd} Not-Preferred GPRS location update (LU) for a GPRS ONLY subscriber with the international mobile subscriber identity (IMSI) in cache table is attempted. In this case, the call flow 1600 in the Figure 16 shows that the managed roaming application (MRA) module 130 has received GPRS Location Update from a subscriber whose 'GPRS only subscriber' field is checked as 'y' in the international mobile subscriber identity (IMSI) list table or the GSM location update (LU) wasn't received before within a configurable period of time (at 1602, 1604). Either of the scenario means that the equipment for this subscriber sends the location update (LU) for GPRS only and that no GSM location update (LU) was sent before.

This call flow shows that a GPRS subscriber sends a GPRS location update (LU) from a 'Preferred' network or a 2^{nd} GPRS location update (LU) from a 'Not-Preferred' network and this subscriber has an entry in the international mobile subscriber identity (IMSI) table (i.e. the previous registration for this subscriber was rejected before). Since this subscriber's registration was denied before, his/her 2^{nd} Not-Preferred registration is accepted and the location update (LU) is forwarded to the home location register (HLR) 118 (at 1606). In this scenario, an over-the-air (OTA) message is also sent to the over-the-air (OTA) Server to download the 'Preferred' public land mobile network (PLMN) list into the subscriber's SIM card, so as to control subscriber's registration into the 'Preferred' network (at 1612, 1614, 1616). If the subscriber is registered into the 'Preferred' network, his/her registration is accepted and forwarded to the home location register (HLR) 118. Furthermore, in case of Preferred GPRS Registration for a subscriber whose registration was not barred before within a configurable period of time, the call flow will be similar to that shown in the Figure 16, except that the over-the-air (OTA) message doesn't get sent out to the subscriber.

A fourth type of call logic may be applied when roaming is not permitted outside the Service Provider's network. This functionality provides the capability to allow a location update (LU) only in that service provider's networks who has deployed the managed roaming application (MRA) module 130 at their central facility. If the location update (LU) originates from a preferred or indifferent (a network in a country where there is not a preferred network, for example) networks, all the location updates (LUs) will be accepted and relayed towards the correct home location register (HLR) 118. Otherwise, they will be rejected with a configurable cause. Based on the network classification, this managed roaming application (MRA) module 130 service logic will be applied only in a country where the managed roaming application (MRA) module 130 Service Provider's network is present. In a country where the service provider's (the service provider who has deployed the managed roaming application (MRA) module 130 at their central facility) network is not present, since all the networks are indifferent, the managed roaming service logic is not applied. However, in case of a region with indifferent networks, if an area is raised to preferred, all the location update (LU) coming from the selected MSC/VLR/SGSN shall be treated as if they were coming from a preferred network.

This functionality will be activated based on the subscriber profile. A per subscriber field, e.g., "Allowing the location update (LU) only belonging to the managed roaming application Service Provider's networks", in the international mobile subscriber identity (IMSI) related table will be used, along with a per network level flag, e.g., 'Perform the managed roaming application.

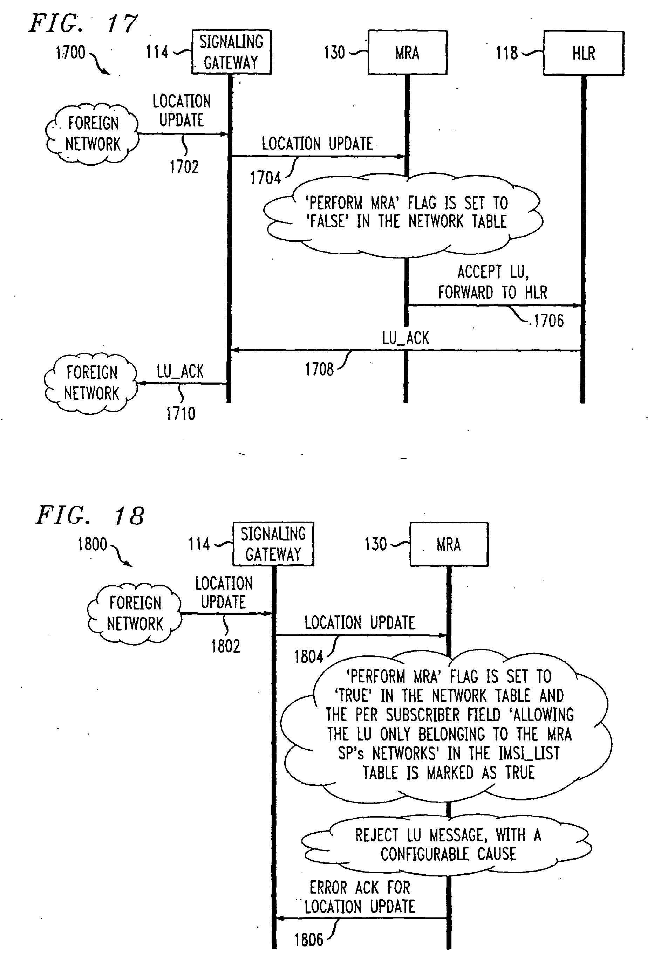

In a first case, a subscriber is in the Indifferent Network and the location update (LU) is accepted. In this case, as shown in a call flow 1700 of Figure 17, the managed roaming application (MRA) 130 will check if the 'Perform the managed roaming application flag in the network level table is marked as 'true' or 'false' after receiving a request (at 1702, 1704). If this flag is set to False, then this network is considered to be the 'Indifferent Network' and, therefore, the managed roaming application (MRA) module 130 logic will be performed and the location update (LU) will be relayed to the home location register (HLR) 118 (at 1706) and acknowledgement sent (at 1708, 1710). In this scenario, there are no preferred and non-preferred networks because the Service Provider's network is not present in the region where the subscriber is roaming. So, all the registrations (first ones and the last ones) are allowed.

In a second case, a subscriber is in the managed roaming application (MRA) module 130 Service Provider's Network, and all the Non-Preferred LUs are barred. As shown in a call flow 1800 of Figure 18, if the 'Perform the managed roaming application flag is set to true and the per subscriber field "Allowing the location update (LU) only belonging to the managed roaming application Service Provider's networks" in the IMSI_List_Table is marked as true for a subscriber and the incoming location update (LU) (at 1802, 1804) originated in the non-managed roaming application (MRA) module 130 network, then the location update (LU) will be barred (the first ones and the next ones) (at 1806). In this scenario, the service provider's network exist in the entire region where the subscriber is roaming.

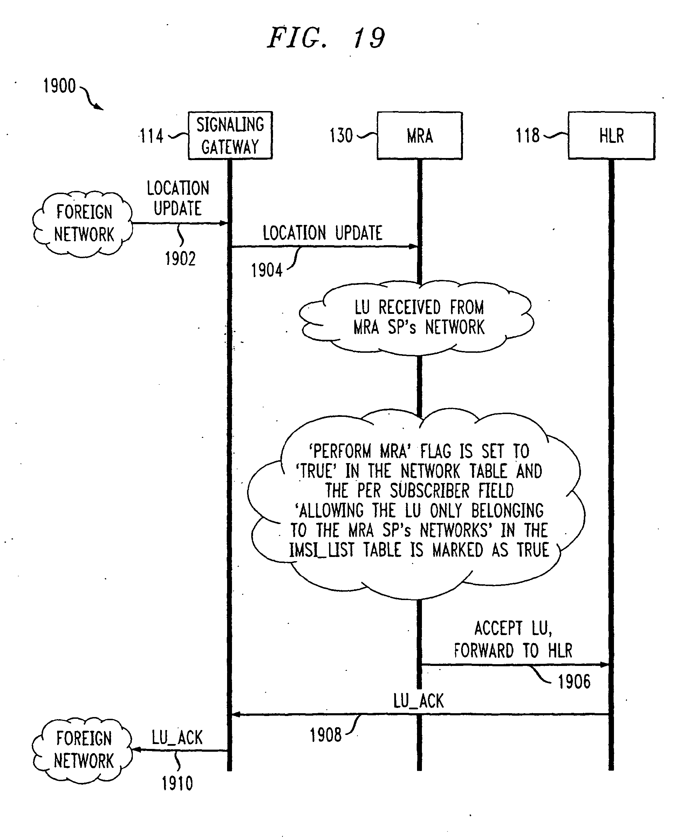

In a third case, a subscriber is in the managed roaming application Service Provider's Network and all the preferred location updates (LUs) are accepted. As shown in a call flow 1900 of Figure 19 below, if the 'Perform the managed roaming application flag is set to true and the per subscriber field "Allowing the location update (LU) only belonging to the managed roaming application Service Provider's networks" in the IMSI_List_Table is marked as true for a subscriber and the incoming location update (LU) (at 1902, 1904) originated at the managed roaming application (MRA) module 130 SP's network, then the location update (LU) will be accepted (at 1906, 1908, 1910). In this scenario, the service provider's network exist in the entire region where the subscriber is roaming.

The above description merely provides a disclosure of particular embodiments of the invention and is not intended for the purposes of limiting the same thereto. As such, the invention is not limited to only the above-described embodiments. Rather, it is recognized that one skilled in the art could conceive alternative embodiments that fall within the scope of the invention.

## Claims

1. A method (200) for managing roaming service provided to a wireless subscriber, the subscriber having a home network and roaming in a second network, the method comprising steps of:
receiving a message (202) from the second network at a signaling gateway of the home network of the subscriber;
transmitting the message (204) to a managed roaming application;
determining (206) if the message is a location update request;
transmitting (208) the message to a home location register for processing if the message is not a location update request; and,
performing a call logic routine (210) on the message by the managed roaming application if the message is a location update request,
wherein the call logic routine comprises at least one of the steps of:
determining whether the location update request should be allowed based on a predetermined threshold percentage for requests received from the second network, determining whether the location update request should be allowed based on whether the second network is a preferred network,
determining whether the location update request originates from a GPRS subscriber, and,
determining whether the location update request should be allowed based on whether the home network and the second network belong to a common service provider.

2. A system for providing managed roaming service in a wireless network, the system comprising;
a database having stored therein subscriber and network profile data; and,
at least one front end element interactive with the database and operative to receive a message (202), determine (206) if the message is a location update request, transmit (208) the message to a home location register for processing if the message is not a location update request, and perform a call logic routine (210) on the message if the request is a location update request;
wherein the call logic routine comprises at least one of the steps of:
determining whether the location update request should be allowed based on a predetermined threshold percentage for requests received from a second network, determining whether the location update request should be allowed based on whether a second network is a preferred network,
determining whether the location update request originates from a GPRS subscriber, and,
determining whether the location update request should be allowed based on whether a home network and a second network belong to a common service provider.

## Patentansprüche

1. Verfahren (200) zur Verwaltung von Roaming-Diensten, die für einen drahtlosen Teilnehmer bereitgestellt werden, wobei der Teilnehmer ein Heimatnetz und Roaming in einem zweiten Netz aufweist, wobei das Verfahren die Schritte umfasst des:
Empfangens einer Nachricht (202) von dem zweiten Netz an einem Signalisierungs-Gateway des Heimatnetzes des Teilnehmers;
Übertragens der Nachricht (204) an eine verwaltete Roaming-Anwendung;
Bestimmens (206), ob die Nachricht eine Standortaktualisierungsanforderung, genannt "Location Update Request", ist;
Übertragens (208) der Nachricht an ein Heimatregister, genannt "Home Location Register", zur Verarbeitung, wenn die Nachricht keine Standortaktualisierungsanforderung ist; und
Ausführens einer Anruflogik-Routine (210) in Bezug auf die Nachricht durch die verwaltete Roaming-Anwendung, wenn die Nachricht eine Standortaktualisierungsanforderung ist;
wobei die Anruflogik-Routine mindestens einen der Schritte umfasst aus [den Schritten des]:
Bestimmens, ob die Standortaktualisierungsanforderung basierend auf einem zuvor festgelegten Schwellenwertprozentsatz für Anforderungen, die von dem zweiten Netz empfangen werden, zugelassen werden sollte;
Bestimmens, ob die Standortaktualisierungsanforderung basierend darauf zugelassen sollte, ob das zweite Netz ein bevorzugtes Netz ist;
Bestimmens, ob die Standortaktualisierungsanforderung von einem GPRS-Teilnehmer ausgeht; und
Bestimmens, ob die Standortaktualisierungsanforderung basierend darauf zugelassen werden sollte, ob das Heimatnetz und das zweite Netz zu einem gemeinsamen Diensteanbieter gehören.

2. System zur Bereitstellung verwalteter Roaming-Dienste in einem drahtlosen Netzwerk, wobei das System umfasst:
eine Datenbank, in welcher Teilnehmer- und Netzprofildaten gespeichert sind; und
mindestens ein mit der Datenbank interaktives Frontend-Element, welches fähig ist, eine Nachricht zu empfangen (202), zu bestimmen (206), ob die Nachricht eine Standortaktualisierungsanforderung ist, die Nachricht an ein Heimatregister zur Verarbeitung zu übertragen (208), wenn die Nachricht keine Standortaktualisierungsanforderung ist, und eine Anruflogik-Routine in Bezug auf die Nachricht auszuführen (210), wenn die Anforderung eine Standortaktualisierungsanforderung ist;
wobei die Anruflogikroutine mindestens einen der Schritte umfasst aus [den Schritten des]:
Bestimmens, ob die Standortaktualisierungsanforderung basierend auf einem zuvor festgelegten Schwellenwertprozentsatz für Anforderungen, die von dem zweiten Netz empfangen werden, zugelassen werden sollte;
Bestimmens, ob die Standortaktualisierungsanforderung basierend darauf zugelassen sollte, ob das zweite Netz ein bevorzugtes Netz ist;
Bestimmens, ob die Standortaktualisierungsanforderung von einem GPRS-Teilnehmer ausgeht; und
Bestimmens, ob die Standortaktualisierungsanforderung basierend darauf zugelassen werden sollte, ob das Heimatnetz und das zweite Netz zu einem gemeinsamen Diensteanbieter gehören.

## Revendications

1. Procédé (200) permettant de gérer un service d'itinérance fourni à un abonné sans fil, l'abonné ayant un réseau de rattachement et étant en itinérance dans un second réseau, le procédé comprenant les étapes suivantes :
recevoir un message (202) du second réseau au niveau d'une passerelle de signalisation du réseau de rattachement de l'abonné ;
transmettre le message (204) à une application d'itinérance gérée ; déterminer (206) si le message est une demande de mise à jour de position ;
transmettre (208) le message à un enregistreur de position de rattachement en vue d'un traitement si le message n'est pas une demande de mise à jour de position ; et,
exécuter une routine de logique d'appel (210) sur le message par l'application d'itinérance gérée si le message est une demande de mise à jour de position ;
dans lequel la routine de logique d'appel comprend au moins l'une des étapes suivantes :
déterminer si la demande de mise à jour de position doit être autorisée sur la base d'un pourcentage de seuil prédéterminé pour les demandes reçues du second réseau,
déterminer si la demande de mise à jour de position doit être autorisée en se basant sur l'hypothèse que le second réseau est un réseau préféré,
déterminer si la demande de mise à jour de position provient d'un abonné GPRS, et,
déterminer si la demande de mise à jour de position doit être autorisée en se basant sur l'hypothèse que le réseau de rattachement et le second réseau appartiennent à un fournisseur de services commun.

2. Système destiné à la fourniture d'un service d'itinérance géré dans un réseau sans fil, le système comprenant :
une base de données ayant en mémoire des données d'abonnés et des données de profil de réseau; et, au moins un élément frontal interactif avec la base de données et actif pour recevoir un message (202), déterminer (206) si le message est une demande de mise à jour de position, communiquer (208) le message à un enregistreur de position de rattachement en vue d'un traitement si le message n'est pas une demande mise à jour de position, et exécuter une routine de logique d'appel (210) sur le message si la demande est une demande de mise à jour de position,
dans lequel la routine de la logique d'appel comprend au moins l'une des étapes suivantes :
déterminer si la demande de mise à jour de position doit être autorisée sur la base d'un pourcentage de seuil prédéterminé pour les demandes reçues d'un second réseau,
déterminer si la demande de mise à jour de position doit être autorisée en se basant sur l'hypothèse qu'un second réseau est un réseau préféré,
déterminer si la demande de mise à jour de position provient d'un abonné GPRS, et,
déterminer si la demande de mise à jour de position doit être autorisée en se basant sur l'hypothèse qu'un réseau de rattachement et un second réseau appartiennent à un fournisseur de services commun.
